# EUROPÄISCHE PATENTSCHRIFT

(11) **EP 4 122 086 B1**
(45) Veröffentlichungstag und Bekanntmachung des Hinweises auf die Patenterteilung: **15.07.2026**
(21) Anmeldenummer: 21721879.1
(22) Anmeldetag: 19.04.2021
(51) Int. Cl.: H02K 15/00, H02K 17/16

(54) **ROTOR MIT KURZSCHLUSSKÄFIG**
ROTOR HAVING A SHORT CIRCUIT CAGE
ROTOR POURVU DE CAGE EN COURT-CIRCUIT

(30) Priorität: 20.05.2020 EP 20175725
(43) Veröffentlichungstag der Anmeldung: 25.01.2023
(73) Patentinhaber: Innomotics GmbH, 90441 Nürnberg (DE)
(72) Erfinder: RESSEL, Ekkehard, 91560 Heilsbronn (DE)
(74) Vertreter: Michalski Hüttermann & Partner mbB
(86) Internationale Anmeldenummer: PCT/EP2021/060028
(87) Internationale Veröffentlichungsnummer: WO 2021/233617

(56) Entgegenhaltungen:
- US-A- 4 341 966
- US-A1- 2003 184 185
- US-A1- 2007 210 667

## Beschreibung

Die Erfindung betrifft einen Rotor mit Käfigläufer, als auch eine dynamoelektrische Maschine mit einem derartigen Rotor. Des Weiteren betrifft die Erfindung ein Verfahren zur Herstellung eines derartigen Rotors mit Käfigläufer.

Rotoren mit Käfigläufern dynamoelektrischer Maschinen, insbesondere Asynchronmotoren werden kostengünstig mit einer gegossenen Läuferwicklung hergestellt. Kurzschlussringe liegen dabei an den Enden des Rotorblechpakets an und sind mit den Leiterstäben u.a. mechanisch und elektrisch leitend fest verbunden. US 2007/210667 A1 ist Stand der Technik und offenbart einen Rotor (1) mit einem Kurzschlusskäfig mit in Nuten angeordneten elektrischen Leitern (9) in einem Blechpaket (5). Der Rotor weist radial freiliegende Nutabschnitte (13) in den axialen Endbereichen des Rotors auf. Dieser Rotor hat an der axialen Stirnseite keine unmittelbar anschließenden weiteren Zusatzkörper und daher auch keine in Zusatzkörpern freiliegende Nutabschnitte.

Durch thermische Ausdehnung und/oder Fliehkraftbeanspruchungen im Betrieb der dynamoelektrischen Maschinen dehnen sich die Kurzschlussringe radial mehr als das Blechpaket des Rotors mit den eingegossenen Stäben. Dabei entstehen Schubspannungen an der Leiterstab-Kurzschlussring-Verbindung. Die Höhe dieser Schubspannung begrenzt die maximal mögliche Drehzahl und die maximal zulässige Temperatur der dynamoelektrischen Maschinen.

Kappenringe am äußeren Umfang der Kurzschlussringe zur Erreichung höherer Drehzahlen sind nicht oder nur bedingt geeignet, da sich dadurch u.a. die thermisch bedingten Schubspannungen nicht vermeiden lassen.

Bei Überschreitung der zulässigen Bemessungsgrenze können deshalb die gegossene Käfigwicklung nicht mehr verwendet werden.

Deshalb werden Käfigwicklungen auch als Kurzschlusswicklungen bezeichnet aus einzeln eingebrachten Stäben und angelöteten oder angeschweißten Kurzschlussringen gefertigt. Diese Wicklungen weisen aufgrund des Fertigungsverfahrens einen axialen Stabüberstand an der Stirnseite des Blechpakets auf, der eine thermische Ausdehnung der Kurzschlussringe ermöglicht und somit höhere Drehzahlen und/oder eine höhere Temperatur ermöglicht. Der Einsatz von Kappenringen ermöglicht bei diesen dynamoelektrischen Maschinen eine weitere Drehzahlsteigerung. Ausgehend davon liegt der Erfindung die Aufgabe zugrunde einen Rotor einer dynamoelektrischen Maschine mit einem Kurzschlusskäfig zu schaffen, der einfach herzustellen ist, und für vergleichsweise hohe höhere Drehzahlen geeignet ist. Außerdem soll eine dementsprechende dynamoelektrische Maschine bereitgestellt werden. Die vorliegende Erfindung ist ein Rotor gemäß dem unabhängigen Anspruch 1 und ein Herstellungsverfahren für diesen Rotor gemäß dem unabhängigen Anspruch 4. Weitere vorteilhafte Ausführungsformen der Erfindung sind in den abhängigen Ansprüche 2,3 und 5 - 7 definiert.

Die Lösung der gestellten Aufgabe gelingt durch einen Rotor einer rotatorischen dynamoelektrischen Maschine, wobei der Rotor folgende Merkmale aufweist:
- zumindest einen magnetisch leitfähigen Körper mit am Umfang verteilt im Wesentlichen axial verlaufenden Nuten,
- zumindest einen Kurzschlusskäfig mit in Nuten angeordneten elektrischen Leitern, die jeweils an den beiden Stirnseiten des Rotors mittels zugewiesener Kurzschlussringe elektrisch kontaktiert sind,
- der magnetisch leitfähige Körper weist einen Basiskörper und an jeder Stirnseite zumindest zwei weitere Zusatzkörper auf, die sich axial an den Basiskörper anschließen, wobei der Basiskörper geblecht ausgeführt und axial durchgehend ist oder aus Teilbasisblechpaketen gebildet ist, wobei sich axial unmittelbar an die Stirnseite des Basiskörpers ein erster Zusatzkörper und axial daran jeweils ein zweiter und ggf. weiterer Zusatzkörper anschließen, wobei der erste Zusatzkörper aus homogenem Material ist und in seiner axialen Dicke dem mehrfachen einer Blechdicke entspricht, wobei der erste Zusatzkörper eine Scheibe ist und die weiteren Zusatzkörper eine Scheibe und/oder ein Teilblechpaket sind,
- radial freiliegende Nutabschnitte in den axialen Endbereichen des Rotors, derart, dass eine radiale Beweglichkeit der Leiter nach außen ermöglicht ist, wobei die radial freiliegenden Nutabschnitte an jeder Stirnseite des magnetisch leitfähigen Körpers zumindest in einem der axial äußeren Zusatzkörper und nur zu einem vorbestimmten axialen Abschnitt in dem unmittelbar am Basiskörper befindlichen ersten Zusatzkörper vorgesehen sind.

Die Lösung der gestellten Aufgabe gelingt auch durch ein Verfahren zur Herstellung eines Rotors einer rotatorischen dynamoelektrischen Maschine mit einem Kurzschlusskäfig nach Anspruch 1 durch folgende Schritte:
- Herstellen eines magnetisch leitfähigen Körpers mit am Umfang verteilt im Wesentlichen axial verlaufenden Nuten,
   wobei der magnetisch leitfähige Körper aus einem Basiskörper, der geblecht ausgeführt und axial durchgehend ist oder aus Teilbasisblechpaketen gebildet ist, und Zusatzkörpern axial aufgebaut wird, wobei der erste Zusatzkörper aus homogenem Material ist und in seiner axialen Dicke dem mehrfachen einer Blechdicke entspricht, wobei der erste Zusatzkörper eine Scheibe ist und die weiteren Zusatzkörper eine Scheibe und/oder ein Teilblechpaket sind,
- Herstellen des Kurzschlusskäfigs mit in den Nuten angeordneten elektrischen Leitern, die jeweils an den beiden Stirnseiten des Rotors mittels Kurzschlussringen elektrisch kontaktiert werden,
- Materialabtragung ausgehend axial von den Stirnseiten des Rotors am radial äußeren Rand, so dass die Leiter in diesem Bereich radial freigelegt werden, derart, dass eine radiale Beweglichkeit der Leiter ermöglicht wird, wobei die radial freiliegenden Nutabschnitte an jeder Stirnseite des magnetisch leitfähigen Körpers zumindest in einem axial äußeren Zusatzkörper und nur zu einem vorbestimmten axialen Abschnitt in den unmittelbar am Basiskörper befindlichen ersten Zusatzkörper vorgesehen sind.

Der magnetisch leitfähige Körper weist einen Basiskörper und zumindest an jeder Stirnseite zumindest zwei weitere Zusatzkörper auf, die sich axial an den Basiskörper anschließen. Dabei schließt sich axial unmittelbar an die Stirnseite des Basiskörpers ein erster Zusatzkörper und axial daran jeweils ein zweiter und ggf. weitere Zusatzkörper an. Der erste Zusatzkörper ist eine Scheibe oder Platte, die überwiegend den Konturen des Basiskörpers angepasst ist.

Um nunmehr erfindungsgemäß eine thermische Expansion der Kurzschlussringe gegenüber dem Blechpaket im Betrieb der dynamoelektrischen Maschine zu ermöglichen, werden die Nuten, insbesondere an den Blechpaketenden, abschnittsweise im ersten Zusatzkörper, an den zweiten und ggf. weiteren Zusatzkörpern so ausgeführt, dass sich die Stäbe radial nach außen bewegen können.

Dazu ist an den Enden des magnetisch leitfähigen Körpers, insbesondere in den zweiten und weiteren Zusatzkörpern eine Nutgeometrie vorgesehen, die keine Hinterschnitte hat und damit entweder parallelflankig ist oder sich radial nach außen verbreitert. Mit anderen Worten die Nutwandungen sind parallelflankig oder vergrößern im radialen Verlauf nach außen ihren Abstand zueinander.

Bei Niederdruck-Gießverfahren kann diese Nutgeometrie geschlossen oder offen ausgeführt werden. Der Gießmantel übernimmt dabei die Abdichtung der radial nach außen offenen Nutgeometrie bzw. der Leiter. Die zweiten und weiteren Zusatzkörper, also der Bereich der offenen Stäbe bzw. Leiter, kann geblecht oder mit massiven Platten ausgeführt sein, die ein mehrfaches der Blechdicke (5 bis 20-fach) aufweisen. Auch das Material der Platten kann identisch zu dem der Bleche oder - elektrotechnisch betrachtet - minderwertiger ausgeführt sein.

Bei Mittel- und Hochdruck-Gießverfahren zur Herstellung der Leiter ist aufgrund des Herstellverfahrens (zunächst) eine geschlossene Nut erforderlich. Bei der geschlossenen Nut werden dann die Stäbe bzw. Leiter an den Paketenden durch Abdrehen des Außendurchmessers freigelegt. Damit wird ebenso eine Nutgeometrie ohne Hinterschnitte geschaffen, die eine radiale Bewegung aufgrund von thermischen Effekten und/oder Fliehkräften gestattet. Mit anderen Worten, dort sind die Nutwandungen parallel oder mit einem Öffnungswinkel ausgeführt.

Da die Elektrobleche üblicherweise mit einer Dicke von 0,5mm oder 0,65 mm ausgeführt sind, würden sonst ohne den ersten Zusatzkörper am Ende der Freidrehung unterschiedlich stark angedrehte oder auch ausgerissene Segmente an den Blechen entstehen.

Dies wird erfindungsgemäß dadurch gelöst, dass eine entsprechend axial dicke Scheibe bzw. Platte sich so an den Basiskörper als erster Zusatzkörper anschließt, dass die Freidrehung in dem homogenen Material dieser Scheibe, also des ersten Zusatzkörpers endet.

Der Bereich zwischen dem Kurzschlussring und dem ersten Zusatzkörper, also der Scheibe, am Ende der Freidrehung kann sowohl geblecht und/oder auch massiv ausgeführt werden Die Nutgeometrie muss in jedem Fall den oben genannten Kriterien entsprechen.

Mit anderen Worten die zweiten und weiteren Zusatzkörper können sowohl geblecht als auch massiv ausgeführt werden.

Zur weiteren Erhöhung der Drehzahl der dynamoelektrischen Maschinen können zusätzlich am Außenumfang der Kurzschlussringe Kappenringe eingesetzt werden. Je nach angestrebter Drehzahlstufe der dynamoelektrischen Maschinen sind diese nur im Bereich des Kurzschlussringes vorhanden oder weisen auch eine zusätzliche Überdeckung der Stäbe im Bereich der radial offenen Nuten auf.

Das kostengünstige Herstellverfahren für gegossene Käfigwicklung eines Rotors kann somit erfindungsgemäß nunmehr auch für höhere Drehzahlen einer dynamoelektrischen Maschine bereitgestellt werden. Dabei liegen die Kurzschlussringe direkt an der Stirnseite des magnetisch leitfähigen Körpers. Dies reduziert auch die axiale Ausladung des Rotors, so dass eine kompakte dynamoelektrische Maschine geschaffen ist.

Der Vorteil liegt insbesondere in der Verwendung von Aluminium-Druckguss-Technik und der Schleudergusstechnik gegenüber einem konventionell gefertigten Kupferläufer.

Erfindungsgemäß führt nunmehr die Verwendung der Gusstechnologie, mit der erfindungsgemäßen Gestaltung der Nutenden, an den Enden des magnetisch leitfähigen Körpers zu radial beweglichen Leitern bzw. Stäben, um radiale Bewegungen aufgrund von thermischen Effekten und/oder Fliehkräften zu gestattet.

Durch zusätzlichen Einsatz von Kappenringen sind derartige Rotoren für noch höhere Drehzahlbereiche der dynamoelektrischen Maschine geeignet.

Die Erfindung sowie weitere Ausgestaltungen der Erfindung werden anhand prinzipiell dargestellter Ausführungsbespiele näher erläutert; darin zeigen:
- FIG 1: einen Teillängsschnitt eines Kurzschlussläufers,
- FIG 2: einen Teilquerschnitt eines Kurzschlussläufers,
- FIG 3, 4: weitere Teillängsschnitte von Kurzschlussläufern,
- FIG 5: einen bearbeiteten Teillängsschnitt eines Kurzschlussläufers,
- FIG 6: einen Teilquerschnitt eines Kurzschlussläufers,
- FIG 7, 8: prinzipielle Längsschnitte von dynamoelektrischen Maschinen.

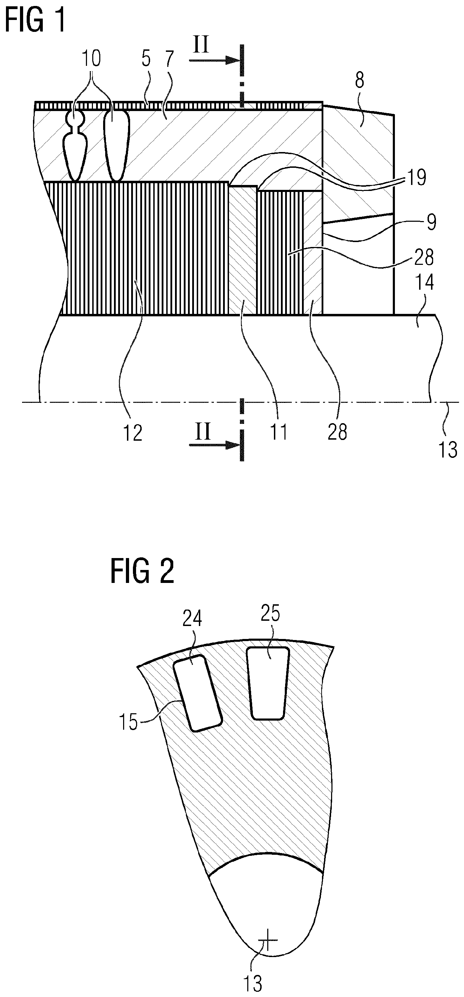

FIG 1 zeigt in einem Teillängsschnitte einen Rotor 5, der als Kurzschlussläufers ausgebildet ist und der einen magnetisch leitfähigen Körper aufweist, mit am Umfang verteilt im Wesentlichen axial verlaufenden Nuten 10. Die dort gezeigten unterschiedlichen Nutformen sind beispielhaft und können auch anders ausgeführt sein.

Der magnetisch leitfähige Körper weist einen Basiskörper 12, und mehrere axial hintereinander angeordnete Zusatzkörper 11, 28 auf.

In dem magnetisch leitfähigen Körper ist ein Kurzschlusskäfig 6 mit in Nuten 10 angeordneten elektrischen Leitern 7 vorgesehen. Die elektrischen Leiter 7 sind jeweils an den beiden Stirnseiten 9 des Rotors 5 mittels zugewiesener Kurzschlussringe 8 elektrisch kontaktiert.

Die Leiter 7 in den Nuten 10 sind dabei unter Verwendung von Aluminium-Druckguss-Technik oder einer Schleudergusstechnik oder durch vorgefertigte Leiterstäbe generiert. Bei den Gusstechniken wird der Kurzschlussring 8 mit angegossen. Bei vorgefertigten Leiterstäben ist zumindest an einer Stirnseite eine nachträgliches elektrisches kontaktieren zwischen den Leiterstäben und einem vorgefertigten Kurzschlussring 8 erforderlich.

Der Kurzschlussläufer ist in diesem Zustand bereits zwar grundsätzlich funktionsfähig, thermische Beanspruchungen und/oder Fliehkraftbeanspruchungen verursachen im Betreib der dynamoelektrischen Maschine aber, wie oben ausgeführt, schädigenden Schubspannungen an der Verbindungsstelle von in den Nuten 10 angeordneten Leitern 7 und den Kurzschlussringen 8. Die axial an den Basiskörper 12 anschließenden Zusatzkörper 11, 28 sind als Scheibe beim ersten Zusatzkörper 11 und als Scheibe und/oder Teilblechpaket bei den folgenden Zusatzkörpern 28 ausgebildet.

Der Rotor 5 kann neben Kurzschlusskäfig 8 auch weitere Drehmomentbildende Merkmale, wie Ausgestaltungen als Reluktanzläufer und/oder Permanentmagnete aufweisen. Dies gestattet dann einem Hochlauf der dynamischen elektrischen Maschine 1 direkt am elektrischen Netz ohne Zwischenschaltung eines Umrichters.

Der Basiskörper 12 ist vorzugsweise geblecht ausgeführt und es schließt sich axial daran der erste Zusatzkörper 11 als Scheibe an. Axial daran schließen sich weitere Scheiben und/oder ein Teilblechpaket an.

In axialer Richtung weist der Leiter 7 zumindest eine Stufung 19 auf, die sich als eine Querschnittsvergrößerung im ersten Zusatzkörper 11 und als eine weitere Querschnittsvergrößerung in den weiteren Zusatzkörpern 28 darstellt. Dies erhöht die Stabilität.

Der Kurzschlussring 8 ragt an der Stirnseite 9 des axial letzten Zusatzkörpers 28 radial nach innen und liegt an der Stirnseite 9 an.

Die Form der Nuten 10 im Basiskörper 12 ist nahezu beliebig ausführbar. Im den Zusatzkörpern 28 jedoch sind die Nutwandungen 15 der Nuten 10 gemäß FIG 2 parallelflankig oder als offene Nutwandungen mit einem leichten Öffnungswinkel ausgeführt. Damit kann nunmehr erfindungsgemäß durch Abdrehen der radial äußeren Berandung bis zum Leiter 7 von der Scheibe und/oder des Teilblechpakets eine radiale Bewegung der Leiter 7 in den Zusatzkörpern 28 im Betrieb der elektrischen Maschine 1 radial nach außen stattfinden.

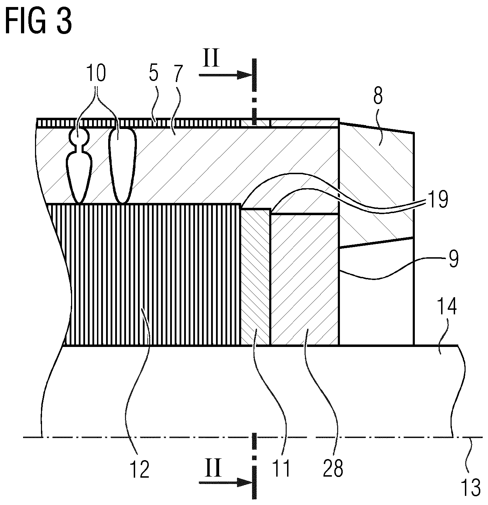

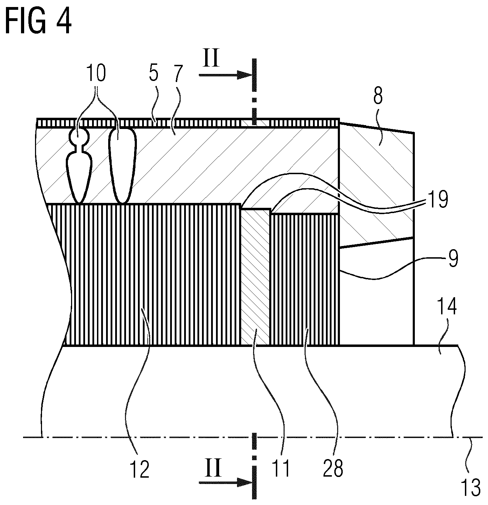

FIG 3, 4, unterscheiden sich in der Ausführung der weiteren Zusatzkörper 28. Zum einen ist der zweite Zusatzkörper 28 auch eine Scheibe. In FIG 4 ist der weitere Zusatzkörper 28 ein Teilblechpaket. In FIG 1 sind die weiteren Zusatzkörper 28 eine Scheibe und ein Teilblechpaket. All diesen Ausführungen sind gemein, dass der erste Zusatzkörper 11 als Scheibe ausgeführt ist. Diese Scheibe entspricht dabei in ihrer axialen Dicke dem mehrfachen (4 bis 15-fachen) einer Blechdicke.

Entscheidend ist, dass beim Abdrehen der Vorgang des Materialabtragens axial innerhalb der Scheibe des ersten Zusatzkörper 11 endet. Der abgedrehte Abschnitt 17 erstreckt sich axial von der Außenseite des Kurzschlussringes 8 bis in den ersten Zusatzkörper 11.

Die Freidrehung bzw. die Materialabtragung endet somit in dem homogenen Material dieser entsprechend axial dicken Scheibe bzw. Platte, die sich an den Basiskörper als erster Zusatzkörper anschließt.

Der axiale Materialabtrag darf nicht vorher enden, da dieser sonst ggf. im Teilblechpaket geendet, was zu unterschiedlich stark angedrehten Blechen oder gar zu ausgerissenen Blechsegmenten führt.

Die radialen Enden der Leiter 7 werden somit in den weiteren Zusatzkörpern 28 axial freigelegt und im ersten Zusatzkörper 11 nur teilweise axial freigelegt.

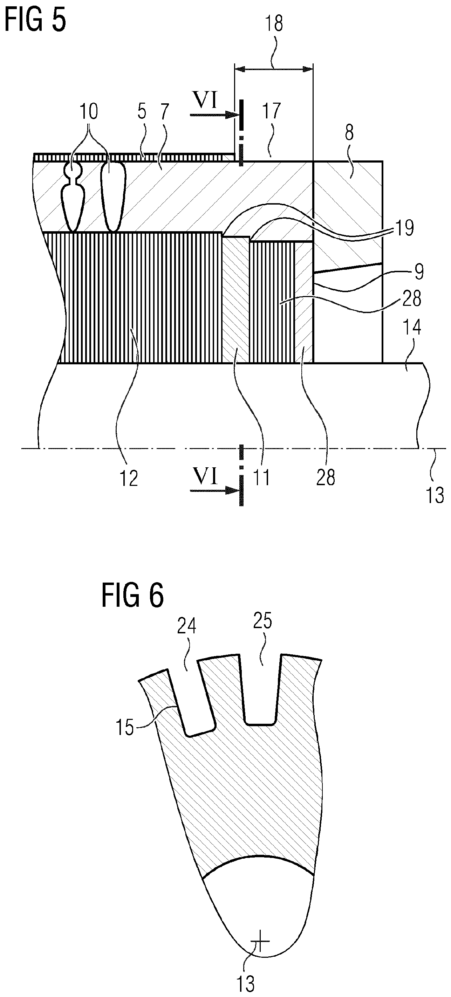

FIG 5 zeigt in einem Teillängsschnitt den Kurzschlussläufer nach FIG 1 nach der Bearbeitung. Dabei sind axial ausgehend vom Kurzschlussring 8 die Zahnkopfverbindungen im Bereich der Nuten 10 des letzten Zusatzkörpers 28 und zum Teil des ersten Zusatzkörpers 11 abgedreht worden.

Dies gestattet nunmehr erfindungsgemäß dem Kurzschlussring 8 auch bei thermischer Beanspruchung ein radiales Ausweichen, ohne dass an der Verbindungsstelle zu den Leitern 7 Schubspannungen generiert werden.

Durch die Gestaltung der Nutformen in den Zusatzkörpern 28, 11 gemäß FIG 6 ist der Leiter 7 radial beweglich.

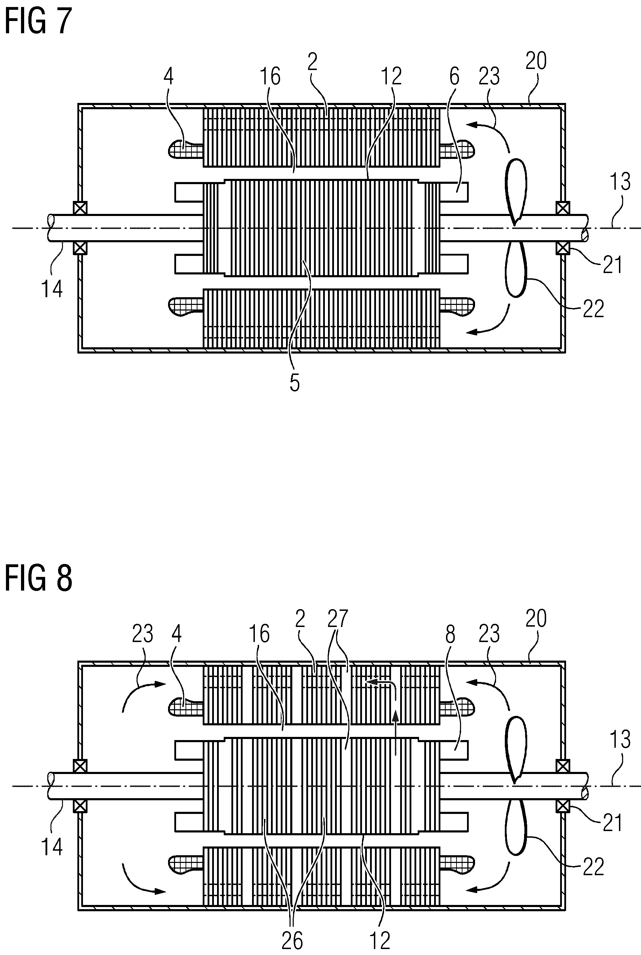

Derartige Maschinen nach FIG 7 oder FIG 8 weisen axial durchgehenden magnetische leitfähige Körper von Rotor 5 und Stator 2 auf oder sie sind aus Teilbasisblechpaketen 26 gebildet, um so auch eine radiale Kühlung zu erhalten.

Dabei werden Luftströme 23 durch die dynamoelektrische Maschine 1 gelenkt oder es ist ein abgeschlossener Innenkühlkreislauf vorhanden. Die Luftströme 23 werden durch einen Wellenlüfter 22 und/oder Fremdlüfter bereitgestellt.

Diese Teilbasisblechpakete 26 bilden auch den Basiskörper 12, d.h. es findet die oben beschriebene Materialabtragung dort nicht statt.

Die Erfindung kann auch für Staffelläufer verwendet werden.

## Patentansprüche

1. Rotor (5) einer rotatorischen dynamoelektrischen Maschine (1), wobei der Rotor (5) folgende Merkmale aufweist:
- zumindest einen magnetisch leitfähigen Körper mit am Umfang verteilt im Wesentlichen axial verlaufenden Nuten (10),
- zumindest einen Kurzschlusskäfig (8) mit in Nuten (10) angeordneten elektrischen Leitern (7), die jeweils an den beiden Stirnseiten (9) des Rotors (5) mittels zugewiesener Kurzschlussringe (8) elektrisch kontaktiert sind,
- der magnetisch leitfähige Körper weist einen Basiskörper (12) und an jeder Stirnseite (9) zumindest zwei weitere Zusatzkörper (11, 28) auf, die sich axial an den Basiskörper (12) anschließen, wobei der Basiskörper (12) geblecht ausgeführt und axial durchgehend ist oder aus Teilbasisblechpaketen (26) gebildet ist, wobei sich axial unmittelbar an die Stirnseite des Basiskörpers (12) ein erster Zusatzkörper (11) und axial daran jeweils ein zweiter und ggf. weiterer Zusatzkörper (28) anschließen, wobei der erste Zusatzkörper (11) aus homogenem Material ist und in seiner axialen Dicke dem mehrfachen einer Blechdicke entspricht, wobei der erste Zusatzkörper (11) eine Scheibe ist und die weiteren Zusatzkörper (28) eine Scheibe und/oder ein Teilblechpaket sind,
- radial freiliegende Nutabschnitte (17) in den axialen Endbereichen des Rotors (5), derart, dass eine radiale Beweglichkeit der Leiter (7) nach außen ermöglicht ist, wobei die radial freiliegenden Nutabschnitte (17) an jeder Stirnseite (9) des magnetisch leitfähigen Körpers zumindest in einem der axial äußeren Zusatzkörper (28) und nur zu einem vorbestimmten axialen Abschnitt in dem unmittelbar am Basiskörper (12) befindlichen ersten Zusatzkörper (11) vorgesehen sind.

2. Rotor (5) einer rotatorischen dynamoelektrischen Maschine (1) nach Anspruch 1, **dadurch gekennzeichnet, dass** die Nuten (10) des Basiskörpers (12) und eines axialen Abschnittes des ersten Zusatzkörpers (11) halboffen oder geschlossen sind.

3. Rotor (5) einer rotatorischen dynamoelektrischen Maschine (1) nach einem der vorhergehenden Ansprüche, **dadurch gekennzeichnet, dass** der Rotor (5) neben dem Kurzschlusskäfig (8) zusätzliche drehmomentbildende Merkmale einer Synchronmaschine aufweist, wie Permanentmagnete und/oder ein Reluktanzmoment bildende Merkmale.

4. Verfahren zur Herstellung eines Rotors (5) mit einem Kurzschlusskäfig (8) nach Anspruch 1 durch folgende Schritte:
- Herstellen eines magnetisch leitfähigen Körpers mit am Umfang verteilt im Wesentlichen axial verlaufenden Nuten (10), wobei der magnetisch leitfähige Körper aus einem Basiskörper (12), der geblecht ausgeführt und axial durchgehend ist oder aus Teilbasisblechpaketen (26) gebildet ist, und Zusatzkörpern (11,28) axial aufgebaut wird, wobei der erste Zusatzkörper (11) aus homogenem Material ist und in seiner axialen Dicke dem mehrfachen einer Blechdicke entspricht, wobei der erste Zusatzkörper (11) eine Scheibe ist und die weiteren Zusatzkörper (2) eine Scheibe und/oder ein Teilblechpaket sind,
- Herstellen des Kurzschlusskäfigs (8) mit in den Nuten (10) angeordneten elektrischen Leitern (7), die jeweils an den beiden Stirnseiten (9) des Rotors (5) mittels Kurzschlussringen (8) elektrisch kontaktiert werden,
- Materialabtragung ausgehend axial von den Stirnseiten (9) des Rotors (5) am radial äußeren Rand, so dass die Leiter (7) in diesem Bereich radial freigelegt werden, derart, dass eine radiale Beweglichkeit der Leiter (7) ermöglicht wird, wobei die radial freiliegenden Nutabschnitte (17) an jeder Stirnseite (9) des magnetisch leitfähigen Körpers zumindest in einem axial äußeren Zusatzkörper (28) und nur zu einem vorbestimmten axialen Abschnitt in den unmittelbar am Basiskörper (12) befindlichen ersten Zusatzkörper (11) vorgesehen sind.

5. Verfahren zur Herstellung eines Rotors (5) einer rotatorischen dynamoelektrischen Maschine (1) nach Anspruch 4, **dad urch gekennzeichnet**, dass die Leiter (7) des Kurzschlusskäfigs (8) durch Druckguss- oder Schleuderguss hergestellt werden.

6. Verfahren zur Herstellung eines Rotors (5) einer rotatorischen dynamoelektrischen Maschine (1) nach Anspruch 5, **dadurch gekennzeichnet, dass** die Leiter (7) mit einem Schleudergussverfahren hergestellt werden, indem radial offene Nuten oder teilgeöffnete Nuten (10) während des Herstellungsprozesses abgedeckt werden.

7. Verfahren zur Herstellung eines Rotors (5) einer rotatorischen dynamoelektrischen Maschine (1) nach Anspruch 5, **dadurch gekennzeichnet, dass** die Leiter (7) mit einem Druckgussverfahren hergestellt werden, wobei alle Nuten (10) des Basiskörpers (12) und der Zusatzkörper (11,28) vor der der Abtragung geschlossen ausgeführt sind.

## Claims

1. Rotor (5) of a rotary dynamoelectric machine (1), wherein the rotor (5) has the following features:
- at least one magnetically conductive body having grooves (10) distributed over the circumference and extending substantially axially,
- at least one short-circuit cage (8) having electrical conductors (7) arranged in grooves (10), which are each electrically contacted at the two end faces (9) of the rotor (5) by means of respective short-circuit rings (8),
- the magnetically conductive body has a base body (12) and, at each end face (9), at least two further additional bodies (11, 28), which adjoin the base body (12) axially, wherein the base body (12) is of laminated construction and is axially continuous or is formed from partial base laminated cores (26), wherein a first additional body (11) adjoins the end face of the base body (12) directly in the axial direction, and a second and, optionally, a further additional body (28) adjoins axially thereto in each case, wherein the first additional body (11) is made of homogeneous material and, in its axial thickness, corresponds to a multiple of the sheet thickness, wherein the first additional body (11) is a disk, and the further additional bodies (28) are a disk and/or a partial laminated core,
- radially exposed groove sections (17) in the axial end regions of the rotor (5), such that radial outward mobility of the conductors (7) is enabled, wherein the radially exposed groove sections (17) are provided at each end face (9) of the magnetically conductive body at least in one of the axially outer additional bodies (28) and only over a predetermined axial section in the first additional body (11) located directly on the base body (12).

2. Rotor (5) of a rotary dynamoelectric machine (1) according to claim 1, **characterized in that** the grooves (10) of the base body (12) and of an axial section of the first additional body (11) are half-open or closed.

3. Rotor (5) of a rotary dynamoelectric machine (1) according to one of the preceding claims, **characterized in that**, in addition to the short-circuit cage (8), the rotor (5) has additional torquegenerating features of a synchronous machine, such as permanent magnets and/or features generating a reluctance torque.

4. Method for producing a rotor (5) having a short-circuit cage (8) according to claim 1, comprising the following steps:
- producing a magnetically conductive body having grooves (10) distributed over the circumference and extending substantially axially, wherein the magnetically conductive body is constructed axially from a base body (12), which is of laminated construction and is axially continuous or is formed from partial base laminated cores (26), and additional bodies (11, 28), wherein the first additional body (11) is made of homogeneous material and, in its axial thickness, corresponds to a multiple of the sheet thickness, wherein the first additional body (11) is a disk, and the further additional bodies (2) are a disk and/or a partial laminated core,
- producing the short-circuit cage (8) having electrical conductors (7) arranged in the grooves (10), which are each electrically contacted at the two end faces (9) of the rotor (5) by means of short-circuit rings (8),
- material removal proceeding axially from the end faces (9) of the rotor (5) at the radially outer edge, such that the conductors (7) are radially exposed in this region and such that radial mobility of the conductors (7) is enabled, wherein the radially exposed groove sections (17) are provided at each end face (9) of the magnetically conductive body at least in one axially outer additional body (28) and only over a predetermined axial section in the first additional body (11) located directly on the base body (12).

5. Method for producing a rotor (5) of a rotary dynamoelectric machine (1) according to claim 4, **characterized in that** the conductors (7) of the short-circuit cage (8) are produced by die casting or centrifugal casting.

6. Method for producing a rotor (5) of a rotary dynamoelectric machine (1) according to claim 5, **characterized in that** the conductors (7) are produced by a centrifugal-casting method by covering radially open grooves or partially open grooves (10) during the production process.

7. Method for producing a rotor (5) of a rotary dynamoelectric machine (1) according to claim 5, **characterized in that** the conductors (7) are produced by a die-casting method, wherein all grooves (10) of the base body (12) and of the additional bodies (11, 28) are embodied as closed before the removal.

## Revendications

1. Rotor (5) d'une machine dynamoélectrique rotative (1), le rotor (5) présentant les caractéristiques suivantes :
- au moins un corps magnétiquement conducteur avec des rainures (10) réparties sur la circonférence et s'étendant essentiellement dans le sens axial,
- au moins une cage de court-circuit (8) avec des conducteurs électriques (7) disposés dans des rainures (10), qui sont chacun en contact électrique au niveau des deux faces frontales (9) du rotor (5) au moyen d'anneaux de court-circuit (8) associés,
- le corps magnétiquement conducteur comporte un corps de base (12) et, sur chaque face frontale (9), au moins deux autres corps supplémentaires (11,28) qui sont axialement adjacents au corps de base (12), le corps de base (12) étant réalisé en tôle et étant axialement continu ou formé de paquets de tôles de base partiels (26), un premier corps supplémentaire (11) étant axialement directement adjacent à la face frontale du corps de base (12) et, axialement à celui-ci, respectivement un deuxième corps supplémentaire et, le cas échéant, un autre corps supplémentaire (28), le premier corps supplémentaire (11) étant constitué d'un matériau homogène et correspondant, dans son épaisseur axiale, à un multiple d'une épaisseur de tôle, le premier corps supplémentaire (11) étant un disque et les autres corps supplémentaires (28) étant un disque et/ou un paquet de tôles partiel,
- des sections de rainure (17) exposées radialement dans les zones d'extrémité axiales du rotor (5), de sorte que les conducteurs (7) peuvent se déplacer radialement vers l'extérieur, les sections de rainure (17) exposées radialement étant prévues sur chaque face d'extrémité (9) du corps magnétiquement conducteur au moins dans l'un des corps supplémentaires (28) extérieurs axialement et uniquement sur une section axiale prédéterminée dans le premier corps supplémentaire (11) situé directement sur le corps de base (12).

2. Rotor (5) d'une machine dynamoélectrique rotative (1) selon la revendication 1, **caractérisé en ce que** les rainures (10) du corps de base (12) et d'une section axiale du premier corps supplémentaire (11) sont semi-ouvertes ou fermées.

3. Rotor (5) d'une machine dynamoélectrique rotative (1) selon l'une des revendications précédentes, **caractérisé en ce que** le rotor (5) présente, en plus de la cage de court-circuit (8), des caractéristiques supplémentaires génératrices de couple d'une machine synchrone, telles que des aimants permanents et/ou des caractéristiques génératrices de couple de réluctance.

4. Procédé de fabrication d'un rotor (5) avec une cage de court-circuit (8) selon la revendication 1, comprenant les étapes suivantes :
- Fabrication d'un corps magnétiquement conducteur avec des rainures (10) essentiellement axiales réparties sur la circonférence, le corps magnétiquement conducteur étant constitué axialement d'un corps de base (12) en tôle et axialement continu ou formé de paquets de tôles de base partiels (26), et de corps supplémentaires (11,28), le premier corps supplémentaire (11) étant en matériau homogène et son épaisseur axiale correspondant à un multiple d'une épaisseur de tôle, le premier corps supplémentaire (11) étant un disque et les autres corps supplémentaires (28) étant un disque et/ou un paquet de tôles partiel,
- Fabrication de la cage de court-circuit (8) avec des conducteurs électriques (7) disposés dans les rainures (10), qui sont chacun mis en contact électrique sur les deux faces frontales (9) du rotor (5) au moyen d'anneaux de court-circuit (8),
- Enlèvement de matière en partant axialement des faces frontales (9) du rotor (5) sur le bord radialement extérieur, de sorte que les conducteurs (7) soient exposés radialement dans cette zone, de manière à permettre une mobilité radiale des conducteurs (7), les sections de rainure (17) exposées radialement étant prévues sur chaque face frontale (9) du corps magnétiquement conducteur au moins dans un corps supplémentaire (28) axialement extérieur et uniquement jusqu'à une section axiale prédéterminée dans le premier corps supplémentaire (11) situé directement sur le corps de base (12).

5. Procédé de fabrication d'un rotor (5) d'une machine dynamoélectrique rotative (1) selon la revendication 4, **caractérisé en ce que** les conducteurs (7) de la cage de court-circuit (8) sont fabriqués par coulée sous pression ou par coulée centrifuge.

6. Procédé de fabrication d'un rotor (5) d'une machine dynamoélectrique rotative (1) selon la revendication 5, **caractérisé en ce que** les conducteurs (7) sont fabriqués par un procédé de coulée centrifuge, les rainures ouvertes radialement ou les rainures partiellement ouvertes (10) étant recouvertes pendant le processus de fabrication.

7. Procédé de fabrication d'un rotor (5) d'une machine dynamoélectrique rotative (1) selon la revendication 5, **caractérisé en ce que** les conducteurs (7) sont fabriqués par un procédé de moulage sous pression, toutes les rainures (10) du corps de base (12) et du corps supplémentaire (11,28) étant fermées avant l'enlèvement de matière.
